# EUROPEAN PATENT APPLICATION

(11) **EP 3 202 481 A1**
(43) Date of publication of application: **09.08.2017**
(21) Application number: 17151640.4
(22) Date of filing: 16.01.2017
(51) Int. Cl.: B01D 45/14, B04B 5/00, F01M 13/04, F01M 1/10

(54) **CRANKCASE VENTILATION AND CENTRIFUGAL OIL FILTER**

(30) Priority: 03.02.2016 US 201615015011
(71) Applicant: Paccar Inc, Bellevue, WA 98004 (US)
(72) Inventor: GROVER, Benjamin T., Maple Valley, WA Washington 98038 (US)
(74) Representative: Gevers Patents

(57) **Abstract**

A filter (50) for an internal combustion engine (20) includes an oil filter (50) and a separator. The oil filter (50) has a rotor (114) that rotates about an axis (in response to oil that is discharged from the rotor (114) . The separator has a spindle (104) that is detachably coupled to the rotor (114). A plurality of discs (164) are mounted to the spindle (104), which is rotated about the axis (140,40) by the rotation of the filter (50). The rotate of the spindle (104) rotates the discs (164), which separates oil from gasses introduced into the separator.

## Description

### BACKGROUND

Modern engines are complex machines having numerous systems that provide, among other benefits, increased engine efficiency, greater power, and reduced emissions. Heavy duty vehicles, in particular rely on such systems to allow the engines to provide the power necessary to perform the intended function of the vehicle, while still meeting government mandated emission regulations.

Internal combustion engines used in motor vehicles typically experience a continual buildup of pressure into the crankcase. As the engine operates, gases from the combustion cylinders leak past the piston rings into the crankcase. In open crankcase ventilation (OCV) systems, this "blow-by" is vented to the atmosphere. Closed crankcase ventilation (CCV) systems vent a controlled amount of gases from the crankcase back into the intake manifold to be combusted by the engine. In both systems, the gases vented from the crankcase include oil droplets. Whether the crankcase gases are being vented to the atmosphere or returned to the intake manifold, it is desirable to remove this oil from the crankcase gases. Accordingly, filters have been implemented to remove the oil from the crankcase gases.

A commonly used crankcase ventilation filter utilizes a series of rotating discs to separate the oil from the crankcase gases. The crankcase gases are then sent to the intake manifold, and the oil removed from by the filter is returned to the oil sump. The separator includes a housing with an inlet in fluid communication of the crankcase of an internal combustion engine. Disposed within the housing is a plurality of concave separation discs mounted to a shaft that extends axially along an interior cavity in the housing. The concave separation discs are spaced apart along the shaft and are positioned generally so that a channel is formed between adjacent discs. Each disc has a flat center portion with an upwardly extending edge. The flat center portions, through which the shaft extends, include a plurality of apertures extending therethrough.

The shaft is coupled to an electric motor that rotates the shaft about a central axis. As crankcase gas is introduced through the inlet, the gas moves upward through the apertures in the crankcase ventilation discs. The gas flows radially outward through the spaces between the crankcase ventilation discs. As the gas flows radially, particles within the gas contact the crankcase ventilation discs and, depending upon the weight of the particle, settle on a portion of the inner section of the disc. The gases continue to move outwardly, eventually exiting the housing via an outlet to be returned to the crankcase.

Another common engine component for heavy duty trucks is a centrifugal oil filter. The oil filter includes a housing in which a rotor is located. The rotor is rotatably mounted to a spindle that extends axially through the housing. The rotor further includes one or more nozzles in fluid communication with an interior portion of the rotor. The spindle, which is fixedly coupled to the housing, is hollow. The interior portion of the spindle is in fluid communication with the oil system such that the engine oil pressure drives oil from the engine oil system into the interior portion of the spindle.

Pressurized oil exits the spindle through apertures formed in the spindle and enters the rotor through a baffle formed in the upper portion of the rotor. The pressurized oil exits the rotor through nozzles into a sump disposed below the rotor. The nozzles are configured so that the oil leaves the rotor in a high velocity jet that is perpendicular to and offset from the axis of the spindle.

The oil jet provides a driving force that generates an angular velocity that rotates the rotor about the spindle. As the oil passes through the spinning rotor on its way from the spindle to the nozzles, the centrifugal force causes contaminate particles to accumulate against the inner walls of the rotor. The oil discharged from the nozzle is collected in a sump and returned to the engine.

With modem engines implementing more complex systems, there is a need for engine components that are smaller, reduce weight, and decrease part count.

### SUMMARY

A first representative embodiment of the disclosed subject matter includes a filter having an oil filter and a separator. The oil filter has a rotor that rotates about an axis in response to oil that is discharged from the rotor. The separator has a spindle that is detachably coupled to the rotor. A plurality of discs is mounted to the spindle, which is rotated about the axis by the rotation of the filter. The rotation of the spindle rotates the discs, which separates oil from gasses introduced into the separator.

A second representative embodiment of the disclosed subject matter includes filter for an internal combustion engine. The filter has a centrifugal oil filter with a rotor mounted within a first housing for rotational movement about an axis. The rotor has an engagement fitting with an oil inlet configured to receive pressurized oil into a cavity within the rotor. The rotor further includes a nozzle configured to discharge oil from the cavity to rotate the rotor about the axis. The filter also has a separator configured to separate oil particles from crankcase gases. The separator has a second housing with a gas inlet and a gas outlet. A spindle is at least partially disposed within the second housing and engages the engagement fitting such that rotation of the rotor drives the spindle to rotate about the axis. A plurality of discs is mounted to the spindle and is configured to separate oil particles from crankcase gases flowing between the discs.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of the disclosed subject matter will become more readily appreciated as the same become better understood by reference to the following detailed description, when taken in conjunction with the accompanying drawings, wherein:
FIGURE 1 shows a schematic drawing of a representative embodiment of a filter in combination with an engine according to various aspects of the present disclosure;
FIGURE 2 shows a first top isometric view of the filter shown in FIGURE 1;
FIGURE 3 shows a second top isometric view of the filter shown in FIGURE 1;
FIGURE 4 shows a bottom isometric view of the filter shown in FIGURE 1;
FIGURE 5 shows a top view of the filter shown in FIGURE 1;
FIGURE 6 shows a partial cutaway of the first top isometric view of the filter shown in FIGURE 2;
FIGURE 7 shows a partial cutaway of a bottom isometric view of the filter shown in FIGURE 4;
FIGURE 8 shows a front cross-sectional view of the filter shown in FIGURE 7;
FIGURE 9 shows a partial cross-sectional view of the filter shown in FIGURE 8; and
FIGURE 10 shows a side cross-sectional view of the filter shown in FIGURE 7.

### DETAILED DESCRIPTION

The detailed description set forth below in connection with the appended drawings, where like numerals reference like elements, are intended as a description of various embodiments of the present disclosure and are not intended to represent the only embodiments. Each embodiment described in this disclosure is provided merely as an example or illustration and should not be construed as precluding other embodiments. The illustrative examples provided herein are not intended to be exhaustive or to limit the disclosure to the precise forms disclosed. Similarly, any steps described herein may be interchangeable with other steps, or combinations of steps, in order to achieve the same or substantially similar result. Likewise, unless otherwise noted, any steps described herein are not limited to a particular order, such that steps may be rearranged in some instances to achieve the same or substantially similar result.

In the following description, specific details are set forth to provide a thorough understanding of exemplary embodiments of the present disclosure. It will be apparent to one skilled in the art, however, that the embodiments disclosed herein may be practiced without embodying all of the specific details. In some instances, well-known process steps have not been described in detail in order not to unnecessarily obscure various aspects of the present disclosure. Further, it will be appreciated that embodiments of the present disclosure may employ any combination of features described herein.

The present application may include references to directions, such as "forward," "rearward," "front," "rear," "upward," "downward," "top," "bottom," "right hand," "left hand," "lateral," "medial," "in," "out," "extended," etc. These references, and other similar references in the present application, are only to assist in helping describe and to understand the particular embodiment and are not intended to limit the present disclosure to these directions or locations.

Described embodiments of the present disclosure are generally directed to various filters for use with diesel engines found in heavy duty trucks. It will be appreciated, however, that the present disclosure is not limited to such uses. Alternate embodiments are contemplated for use with other types of vehicles, other types of internal combustion engines, i.e., gasoline engines, and engines used in environments other than vehicles.

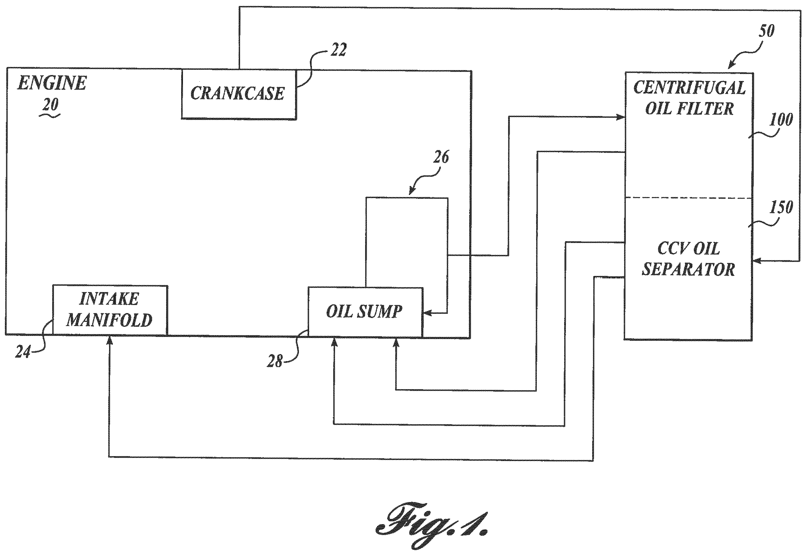

FIGURE 1 shows a schematic diagram of a combined crankcase ventilation filter and centrifugal oil filter, referred to hereafter as the filter 50, according to a representative embodiment of the present disclosure. As described in further detail below, the filter 50 includes an oil filter portion 100 in combination with a crankcase ventilation oil separator portion 150. The oil filter portion 100 takes oil from the oil system 26 of the engine and removes particulate matter from the oil before returning the oil to the oil system via the oil sump 28. The crankcase ventilation oil separator portion 150 takes blow-by from the crankcase 22 of the engine and removes oil from the crankcase gases. The oil is returned to the oil system 26 via the oil sump 28, and the crankcase gases are returned to the intake manifold 24 of the engine 20 to be combusted by the engine. The oil filter portion 100 and the crankcase ventilation oil separator portion 150 share components, thereby reducing the cost, complexity, weight, and required space within the engine compartment.

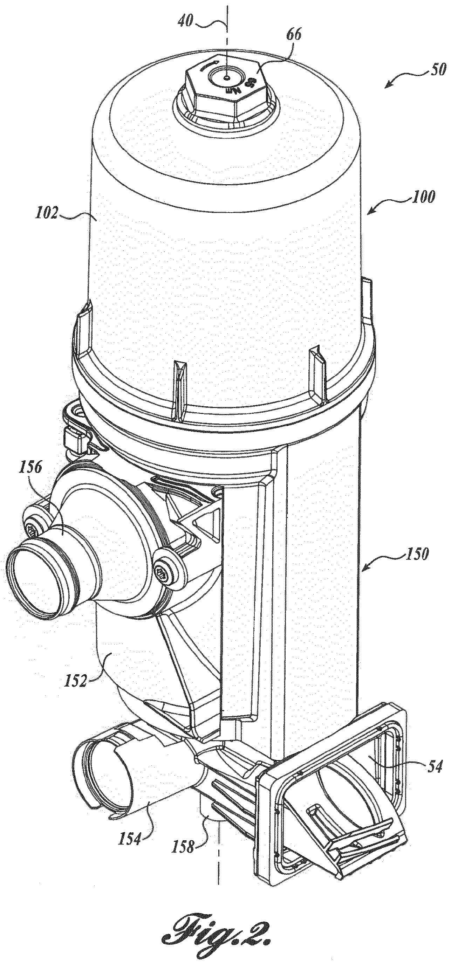

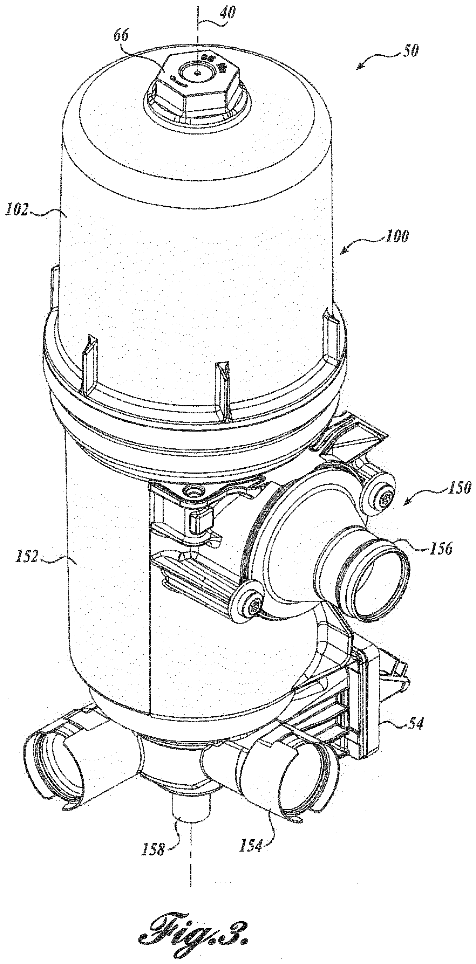

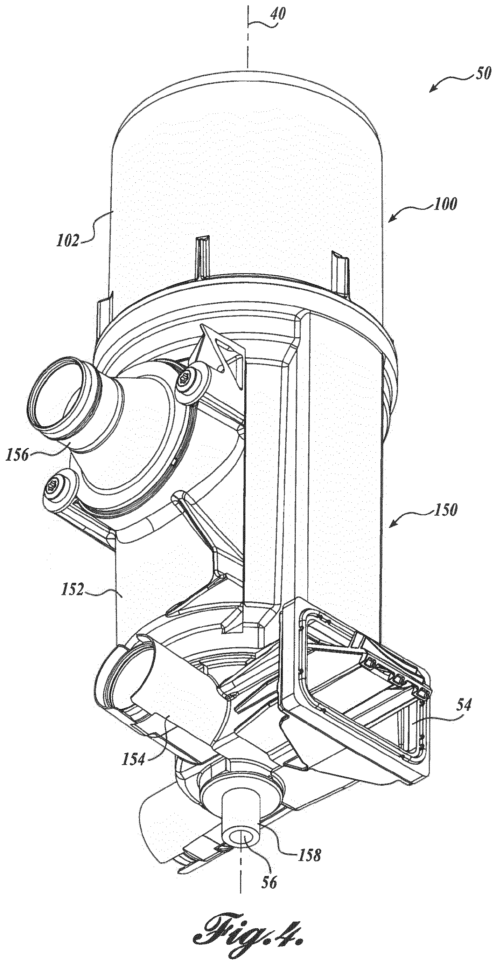

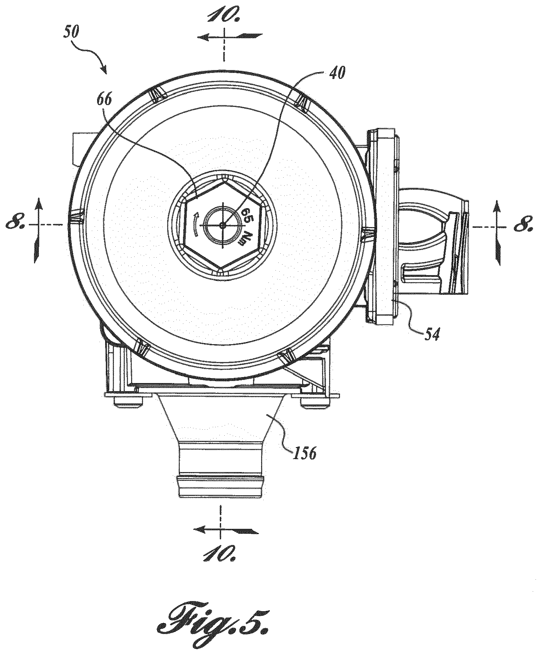

Referring now to FIGURES 2-5, the filter 50 is configured to have an upper oil filter portion 100 and a lower crankcase ventilation oil separator portion 150 with a common central axis 40. The oil filter portion 100 includes a generally cylindrical oil filter housing 102 threadedly coupled to one end of a crankcase ventilation oil separator housing 152. To assist in coupling and uncoupling the oil filter housing 102 and the crankcase ventilation oil separator housing 152, a hexagonal tooling feature 66 is located on an upper end of the oil filter housing 102. The tooling feature 66 is coaxial with axis 40 and is sized and configured to be received within a standard socket or wrench to provide a mechanical advantage that facilitates assembly and disassembly of the filter 50. It will be appreciated that the tooling feature is not limited to the illustrated hexagonal shape, but can include any suitable shape for engaging a standard or customized tool. Further the feature is not limited to a protrusion, as illustrated, but can also be a recess sized and configured to receive a portion of a tool, such as a hex key or a driver, for example.

Attached to an opposite end of the crankcase ventilation oil separator housing 152 is a base 58. As will be described in further detail, the base 58 defines a lower portion of the crankcase ventilation oil separator portion 150 and includes a sump 52 to collect oil from both the oil filter portion 100 and the crankcase ventilation oil separator portion 150 before it is returned to the oil system 26.

Still referring to FIGURES 2-5, the filter 50 includes an inlet 154 extending from the crankcase ventilation oil separator housing 152. The inlet 154 is sized and configured to be connected to the crankcase 22 using hoses or other suitable conduits to provide a fluid connection between the crankcase and an interior portion of the crankcase ventilation oil separator portion 150. Thus, pressurized crankcase gases containing oil particles are introduced into the crankcase ventilation oil separator portion 150 where oil is separated from the crankcase gases. The crankcase gases exit the crankcase ventilation oil separator portion 150 through an outlet 156 that is in fluid communication with the intake manifold 24 by hoses or other suitable conduits. With the oil removed or at least partially removed, the crankcase gases are reintroduced into the engine 20 through the intake manifold 24 for combustion. The oil that has been removed from the crankcase gases is collected in the oil sump 52 located at the bottom of the filter 50 and returned to the oil system 26 through an oil outlet 54. The oil outlet 54 is in fluid connection with an input for the oil system 26 by hoses or other suitable conduits.

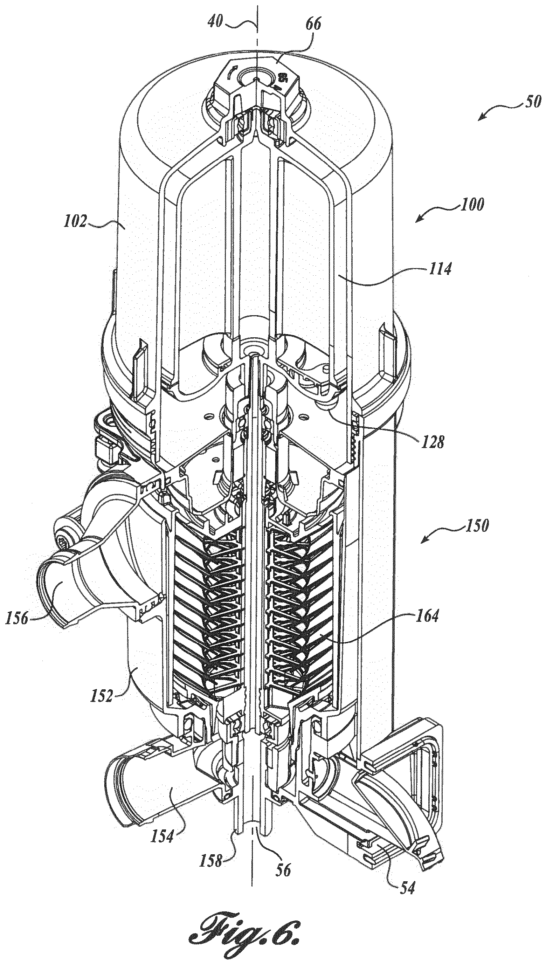

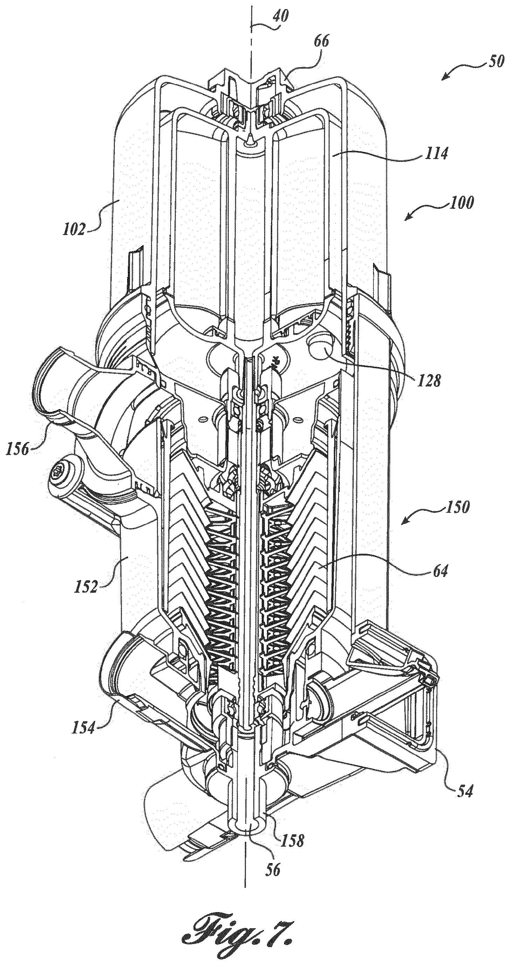

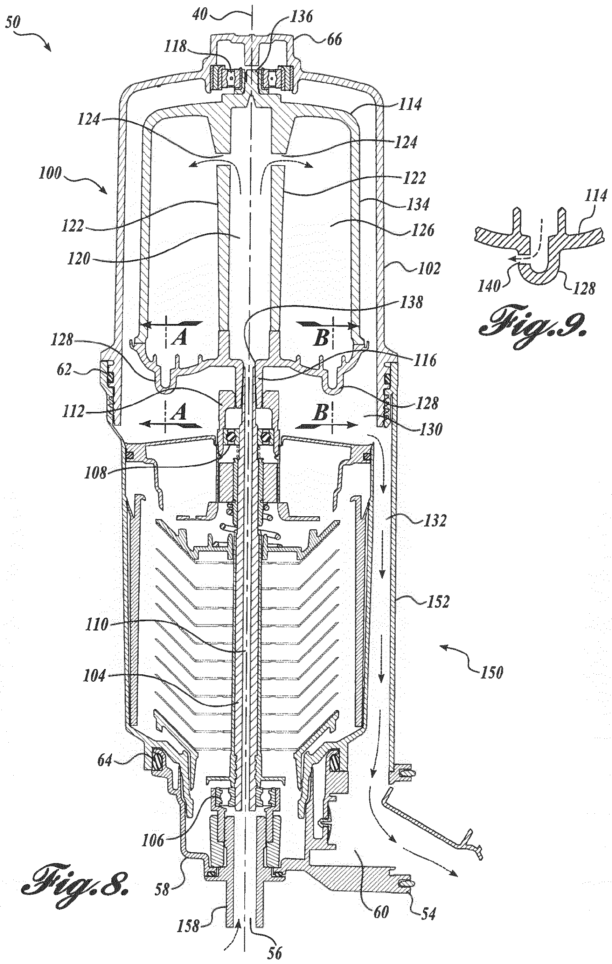

Referring now to FIGURES 6-9, the oil filter portion 100 will be described. As best shown in FIGURE 8, the base 58 includes an oil inlet fitting 158 coupled thereto. The oil inlet fitting 158 includes an oil inlet 54 in the form of a cylindrical channel extending through the fitting 158. In the illustrated embodiment, the channel is coaxial with axis 40. A portion of the fitting 158 extends away from the base 58 and is sized and configured to engage one end of a hose or conduit that provides pressurized oil from the oil system 26 of the engine 20.

An elongate spindle 104 extends through the crankcase ventilation oil separator housing 152. The spindle 104 is rotatably mounted to the crankcase ventilation oil separator housing 152 by bearings 106 and 108 disposed at the ends of the spindle 104. The bearings 106 and 108 are positioned such that the spindle 104 is rotatable about axis 40 relative to the crankcase ventilation oil separator housing 152.

A channel 110 extends longitudinally through the spindle 104. At a first end of the spindle 104, which is proximate to the lower bearing 106, the channel 110 is in fluid communication with the oil inlet 56. In this regard, the oil inlet fitting 158 and the spindle 104 are configured such that pressurized oil from the engine 20 passes through the oil inlet 56 and enters the first end of the channel 110.

A second end of the spindle 104, which is proximate to the upper bearing 108, engages a rotor 114, which is rotatably disposed within the oil filter housing 102. The rotor 114 includes a generally cylindrical housing 134 and an engagement element 116 extending downward therefrom. The engagement element 116 has an aperture 138 extending therethrough that is sized and configured to receive the second end of the spindle 104. A mount 112 is preferably included to surround the exterior of the engagement element 116 to add additional support to the connection between the engagement element 116 and the spindle 104.

The aperture 138 is keyed to the engagement element 116 so that the when the rotor 114 rotates about axis 40, the engagement element 116 drives the spindle 104 to rotate about axis 40 in unison with the spindle. In this regard, the engagement element 116 preferably may have a noncircular cross-section, and the spindle 104 may have a corresponding noncircular recess that allows for translation of the engagement element 116 relative to the spindle 104 along axis 40, but limits rotation of the engagement element 116 relative to the spindle 104 about axis 40.

The cross-sectional shape of the engagement element 116 can be hexagonal, ovate, square, or any other suitable shape that prevents rotation of the engagement element 116 relative to the spindle 104 about axis 40 when the engagement element 116 is engaged with a corresponding recess in the spindle 104. Accordingly, embodiments having different cross-sectional shapes are contemplated and such embodiments should be considered within the scope of the present disclosure. Further alternate embodiments are contemplated in which a retaining feature, such as a set screw, ball/detent combination, or other suitable configuration releasably retains the spindle 104 within the engagement element 116. Moreover, while embodiments are described in which the spindle 104 is received within the engagement element 116, alternative embodiments are contemplated in which the engagement element 116 is received within the spindle 104. These and other variations of the disclosed interface between the spindle 104 and the rotor 114 are contemplated and should be considered within the scope of the present disclosure.

A second engagement element 136 extends axially from the upper end of the rotor 114. The second engagement element 136 is sized and configured to engage a bearing 118 associated with the interior of the oil filter housing 102. The bearing 118 and the spindle 104 cooperate to rotatably secure the rotor 114 about axis 40 within the oil filter housing 102. More specifically, the rotor 114 is rotatably mounted within the oil filter housing 102 such that rotation of the rotor 114 about axis 40 drives the spindle 104 to rotate about axis 40.

The interior of the rotor 114 is divided by an inner wall 122 into a cylindrical inner chamber 120 and an outer chamber 126 with an inner boundary generally defined by the outer surface of the inner wall 122 and an outer boundary generally defined by an inner wall of the housing 134 of the rotor 114. The aperture 138 at the bottom of the rotor 114 opens into the inner chamber 120 of the rotor so that the inner chamber 120 is in fluid communication with the channel 110 that extends through the spindle 104. The inner chamber 120 is also in fluid communication with the outer chamber 126 through one or more apertures 124 extending through the inner wall 122. The one or more apertures 124 are preferably located near the upper end of the inner wall 122, however, the location of the one or more apertures 124 can vary, and the illustrated locations should not be considered limiting.

Referring now to FIGURES 8 and 9, one or more nozzle 128 are positioned on the lower end of the housing 134. Each nozzle is positioned a distance from axis 40 and includes an outlet 140 positioned and oriented to discharge oil in a direction normal to the axis 40. The discharge of oil imparts a moment on the rotor 114 that tends to rotate the rotor about axis 40. When more than one nozzle 128 is employed, the each nozzle is positioned to rotate the rotor 114 in the same directions as the other nozzles, as indicated in sections A-A and B-B, which are both represented by FIGURE 9. It will be appreciated that the number, location, and configuration of the nozzles 128 can vary within the scope of the present disclosure.

A sump 130 is located at the bottom of the centrifugal oil filter 100. Oil discharged from the nozzles 128 collects in the sump 130. A channel 132 is formed in the oil filter housing 152 and has a first end in fluid communication with the sump 130 and a second end in fluid communication with a base sump 60 located at the bottom of the filter 50. The base sump 60 is in fluid communication with the oil outlet 54 so that oil collected in the base sump 60 is returned to the oil system 26 of the engine 20.

Over time, the collection of particulate matter within the outer chamber 126 makes it necessary to service the oil filter portion 100. The disclosed oil filter portion allows for the filter to be easily serviced. To service the filter portion 100, an operator removes the oil filter housing 102 from the oil separator housing 152 by rotating the oil filter housing 102 relative to the oil separator housing 152 to disengage the threaded connection therebetween. With the oil filter housing 102 removed, the rotor 114 is removed by lifting the rotor upward to disengage the first engagement element 116 from the spindle 104 and the mount 112. A replacement rotor 112 is then mounted to the spindle 104, and the oil filter housing 102 is mounted to the oil separator housing 152.

Referring now to FIGURES 6, 7, and 10, the crankcase ventilation oil separator portion 150 will be described. The crankcase ventilation oil separator housing 152 defines an internal cavity 160. The inlet 152 is in fluid communication with the cavity 160 so that the crankcase ventilation oil separator portion 150 can receive gases from the crankcase 22 into a lower portion of the cavity 160. The outlet 156 is in fluid communication with an upper portion of the cavity to allow gases from within the cavity 160 to be returned to the intake manifold 24. Openings at the bottom end of the cavity put the cavity in fluid communication with the previously described base sump 60.

A cylindrical base 162 surrounds and engages the spindle 162 so that rotation of the spindle about axis 40 rotates the base 162 about axis 140. A plurality of concave discs 164 are axially spaced apart and mounted to the base 162. Each disc 164 has a generally flat center portion 168 that is fixedly mounted to the base 162 and oriented to be generally perpendicular to axis 40. Each disc 164 further includes an edge portion 170 that extends radially and upwardly at an angle from the edge of the center portion 168. A plurality of apertures 172 extends through base portion of each disc 164. The discs 164 spaced along the base 162 so that there is a space 166 between adjacent discs 164.

As previously noted, the spindle 104 is supported by bearings 106 and 108. The engagement of the base 162 with the spindle 104 prevents or limits lateral movement of the base. Downward movement of the base is restrained by a bottom fitting 174 mounted to the crankcase ventilation oil separator housing 152. In the illustrated embodiment, the bottom fitting 174 is sized and configured to engage a lower surface of the bottom disc 164, thereby preventing the downward movement of the disc. With the bottom disc restrained in this manner, the base and the remaining discs are also prevented from moving downward.

A top fitting 176 engages an upper surface of the top disc 164 and applies a biasing force that resists upward movement of the top disc and, therefore the base 162. Specifically, a lower surface of the top fitting 176 engages an upper surface of the top disc 164 and a spring 178 applies a downward force on the top disc 164, which in turn applies a downward force on the base 162 to maintain the vertical position of the base within the crankcase ventilation oil separator housing 152.

In operation, the disclosed filter 50 provides a compact and efficient device for filtering engine oil and for separating oil from crankcase gases before returning the gases to the intake manifold for combustion. Referring back to FIGURE 8, pressurized oil from the engine oil system 26 enters the filter 50 through the oil inlet 56. The pressurized oil passes through the oil inlet fitting and the channel 110 of the spindle 104. The pressurized oil exits the opposite end of the channel 110 into the inner chamber 120 of the rotor 114 and then moves from the inner chamber to an upper portion of the outer chamber 126 through the apertures 124 in the inner wall 122.

The pressurized oil exits the outer chamber 126 through the nozzles 128 located at the bottom of the rotor 114. Due to the position and orientation of the nozzles 128, the force of the pressurized oil leaving the nozzles 128 applies a force to the rotor 114 that rotates the rotor about axis 40. The rotation of the rotor 114 also rotates the oil within the outer chamber 126. The centrifugal force of the rotation drives heavier particulate matter radially outward, wherein the particulate matter collects on the outer wall of the outer chamber 126. As the particulate matter accumulates against the outer wall of the outer chamber 126, the oil is free to pass through the nozzles. In this manner, particulate matter is removed from the oil.

The filtered oil that is discharged from the nozzles 128 is collected by the sump 130 and then moves through channel 132 to the base sump 60. The filtered oil collected by the base sump 130 is then returned to the oil system 26 of the engine 20.

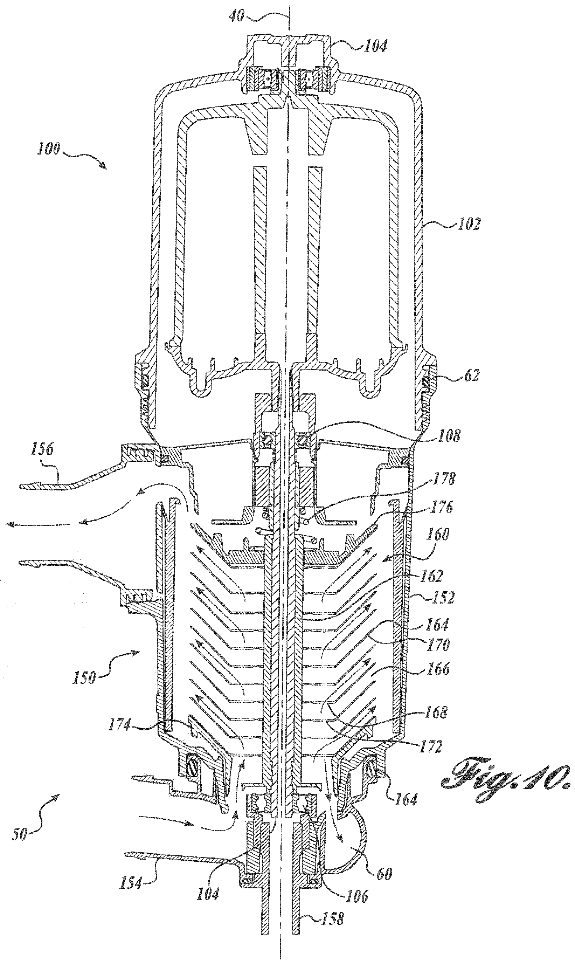

Referring now to FIGURE 10, operation of the crankcase ventilation oil separator portion 150 will be described. As previously described, pressurized oil from the engine 20 drives the rotor 114 of the oil filter portion 100 to rotate about axis 40. Rotation of the rotor 114, in turn, rotates the spindle 110, which rotates the disc base 162 and the attached discs 164 about axis 40. As discs 164 rotate, gases from the crankcase 22 enter the crankcase ventilation oil separator portion 150 through the inlet 154. The gases move upward through the apertures 172 located at the center portions 168 if the discs 164.

The gases moving upward through are dispersed radially through the spaces 166 between the discs 164. As the gases move outward through the spaces 164 oil particles contact and adhere to the surface of the discs 164. The oil particles come into contact with other oil particles and adhere to each other to form larger oil particles. The size of the oil particles continues to increase as more particles contact each other. Eventually, the oil particle reach a size where the centrifugal forces acting on the particles overcomes the adhesive forces between the particles and the discs 164, and the particles are discharged outward from the discs. The gases continue to flow upward in the cavity 160 until they exit through the outlet 156, after which the gases flow to the engine intake manifold 24 to be combusted in the engine 20. While the gases are returned to the engine 24, the oil separated from the gases collects against the walls of the filter housing 152 and then drains down into the base sump 60 to be returned to the oil system 26 of the engine 20 along with the oil filtered by the centrifugal oil filter 100.

The disclosed filter 50 provides significant advantages over known filter systems. By using the angular velocity generated by the centrifugal oil filter 100 to drive the crankcase ventilation oil separator portion 150, the need for a separate motor is eliminated, reducing part count, cost, weight, and space required to accommodate the filter 50. Further, the coupling between the rotor 114 and the spindle 104 allows for maintenance of the centrifugal oil filter 100, i.e., replacement of the rotor 114 with minimal tools and effort.

While illustrative embodiments have been illustrated and described, it will be appreciated that various changes can be made therein without departing from the spirit and scope of the disclosure.

## Claims

1. A filter, comprising:
(a) an oil filter, comprising a rotor configured to be rotated about an axis by oil discharged from the rotor; and
(b) a separator comprising a spindle detachably coupled to the rotor and a plurality of discs mounted thereto, rotation of the rotor driving the spindle to rotate about the axis, wherein rotation of the spindle rotates the discs to separate oil from gasses introduced into the separator.

2. The filter of Claim 2, the rotor comprising an engagement fitting having a first shape, the spindle having a recess corresponding to the first shape, engagement of the first shape with the recess limiting rotation of the engagement fitting relative to the spindle about the axis.

3. The filter of Claim 2, wherein the engagement fitting configured to be slidably received within the recess.

4. The filter of Claim 1, wherein a channel extends through the spindle, a first end of the channel being configured to received pressurized oil, a second end of the channel being in fluid communication with an oil inlet formed in the engagement fitting.

5. The filter of Claim 1, wherein the oil filter comprises a first housing and the separator comprises a second housing, the first housing being threadedly coupled to the second housing.

6. The filter of Claim 5, wherein the rotor is slidably removable from the filter when the first housing is decoupled from the second housing.

7. The filter of Claim 5, wherein the first housing supports the rotor when the first housing is coupled to the second housing.

8. A filter for an internal combustion engine, comprising:
(a) an centrifugal oil filter, comprising:
(i) a rotor mounted within a first housing for rotational movement about an axis;
(ii) an engagement fitting having an oil inlet configured to receive pressurized oil into a cavity within the rotor; and
(iii) a nozzle configured to discharge oil from the cavity to rotate the rotor about the axis; and
(b) a separator configured to separate oil particles from crankcase gases, the separator comprising:
(i) a second housing having a gas inlet and a gas outlet;
(ii) a spindle at least partially disposed within the second housing, the spindle engaging the engagement fitting, rotation of the rotor rotating the spindle about the axis; and
(iii) a plurality of discs mounted to the spindle; the plurality of discs being configured to separate oil particles from crankcase gases flowing between the discs.

9. The filter of Claim 8, wherein an outer surface of the engagement fitting has a first shape and the spindle has a recess corresponding to the first shape, engagement of the first shape with the recess limiting rotation of the engagement fitting relative to the spindle about the axis.

10. The filter of Claim 9, wherein the engagement fitting configured to be slidably received within the recess.

11. The filter of Claim 8, wherein a channel extends through the spindle, a first end of the channel being configured to received pressurized oil, a second end of the channel being in fluid communication with the oil inlet of the engagement fitting.

12. The filter of Claim 8, wherein the first housing is threadedly coupled to the second housing.

13. The filter of Claim 12, wherein the rotor is slidably removable from the filter when the first housing is decoupled from the second housing.
